# EUROPEAN PATENT APPLICATION

(11) **EP 3 065 385 A1**
(43) Date of publication of application: **07.09.2016**
(21) Application number: 14798657.4
(22) Date of filing: 17.04.2014
(51) Int. Cl.: H04M 1/725

(54) **MOBILE TERMINAL TALK MODE SWITCHING METHOD, DEVICE AND STORAGE MEDIUM**

(30) Priority: 02.12.2013 CN 201310634967
(71) Applicant: ZTE Corporation, Shenzhen, Guangdong 518057 (CN)
(72) Inventor: XU, Yuanyuan, Shenzhen Guangdong 518057 (CN)
(74) Representative: Awapatent AB
(86) International application number: PCT/CN2014/075630
(87) International publication number: WO 2014/183529

(57) **Abstract**

The present invention discloses a method for switching a talk mode of a mobile terminal, the method includes: detecting in real time a distance between a mobile terminal in a calling state and a current user; identifying whether the mobile terminal remains in the calling state when the distance is detected to exceed a first preset threshold; detecting a sight of the current user when identifying that the mobile terminal remains in the calling state, and switching the talk mode of the mobile terminal from a microphone mode to a speaker mode when detecting that the sight of the current user covers a screen area of the mobile terminal. At the same time, the present invention further discloses an apparatus and a storage medium for switching a talk mode of a mobile terminal.

## Description

### Technical Field

The present invention relates to the electronic technology field, and in particular, to a method, an apparatus and a storage medium for switching a talk mode of a mobile terminal.

### Background of the Related Art

With the development of the mobile terminals, the mobile terminals thereof have more and more devices and functions. For the most traditional functions of the mobile terminal, such as the talk function, a lot of innovations also appear, to provide conveniences to the users ; for example, the distance sensors are used during a call to automatically turn off the screen, or the motion sensors are used to automatically achieve the functions, such as, user answering and initiating the call, etc.; while another common problem of the user during the call is: If it is required to record some contents in a calling state or it is needed to switch to the speaker mode due to other reasons, it often needs to wait for lighting up the screen, and then find the speaker button to switch to the speaker mode.

In view of that problem, part of the manufacturers realize the automatic switching of the speaker mode by adopting the distance sensor at present; while that method will bring the following problems: in the daily life, the user must put the mobile terminal away from the ear when requiring to end the call; and it is liable for the mobile terminal to mistake the operation of hanging off the call for the operation of switching to the speaker mode, which degrades the user experience.

### Summary of the Invention

The embodiment of the present invention provides a method, an apparatus and a storage medium for switching a talk mode of a mobile terminal, and solves the problem that it is unable to automatically switch to the talk mode desired by the user during a call.

According to one aspect of the embodiment of the present invention, a method for switching a talk mode of a mobile terminal is provided, comprising:
detecting in real time a distance between a mobile terminal in a calling state and a current user;
identifying whether the mobile terminal remains in the calling state when detecting that the distance exceeds a first preset threshold;
detecting a sight of the current user when identifying that the mobile terminal remains in the calling state, and switching the talk mode of the mobile terminal from a microphone mode to a speaker mode when detecting that the sight of the current user covers a screen area of the mobile terminal.

Preferably, the method further comprises:
executing a step of a microphone mute operation of the mobile terminal when identifying that the mobile terminal remains in the calling state and when detecting that the sight of the current user does not cover the screen area of the mobile terminal.

Preferably, said switching the talk mode of the mobile terminal from a microphone mode to a mute mode when identifying that the mobile terminal remains in the calling state and when detecting that the sight of the current user does not cover the screen area of the mobile terminal comprises:
continuing to detect a current air pressure value in a microphone of the mobile terminal when identifying that the mobile terminal remains in the calling state and when detecting that the sight of the current user does not cover the screen area of the mobile terminal; and
if the current air pressure value is equal to or greater than an obtained first air pressure value, then switching the talk mode of the mobile terminal from the microphone mode to the mute mode.

Preferably, the method further comprises:
obtaining the first air pressure value by monitoring an air pressure value generated by covering the microphone of the mobile terminal with hand; and
storing the first air pressure value in the mobile terminal.

Preferably, said identifying whether the mobile terminal remains in the calling state when detecting that the distance exceeds a first preset threshold comprises:
obtaining voice in a call link and recognizing the voice as a corresponding semantic when detecting that the mobile terminal exceeds the preset first threshold;
determining that the mobile terminal is in a hanging up state if the recognized voice semantic conforms to a preset ending-type voice semantic; and
determining that the mobile terminal is in a continuous calling state if the recognized voice semantic does not conform to the preset ending-type voice semantic.

Preferably, the method further comprises:
when detecting that the distance between the mobile terminal and the current user is reduced from exceeding the first threshold to not exceeding the first threshold, switching the talk mode of the mobile terminal from the speaker mode to the microphone mode.

According to another aspect of the embodiment of the present invention, an apparatus for switching a talk mode of a mobile terminal is provided, the apparatus comprises:
a detection module, configured to detect in real time a distance between a mobile terminal in a calling state and a current user;
a calling state identification module, configured to: when detecting that the distance exceeds a first preset threshold, identify whether the mobile terminal remains in the calling state; and
a talk mode switching module, configured to: detect sight of the current user when identifying that the mobile terminal remains in the calling state, and switch the talk mode of the mobile terminal from a microphone mode to a speaker mode when detecting that the sight of the current user covers a screen area of the mobile terminal.

Preferably, the talk audio switching module comprises:
a mute switching submodule, configured to: continue to detect a current air pressure value in a microphone of the mobile terminal when identifying that the mobile terminal remains in the calling state and when detecting that the sight of the current user does not cover the screen area of the mobile terminal; and then switch the talk mode of the mobile terminal from the microphone mode to a mute mode when detecting that the current air pressure value is equal to or greater than an obtained first air pressure value.

Preferably, the talk audio switching module further comprises:
a submodule for obtaining a first air pressure value, configured to: obtain the first air pressure value by monitoring an air pressure value generated by covering the microphone with hand of the current user; and store the hand-covered air pressure value in the mobile terminal.

Preferably, the calling state identification module comprises:
a recognition submodule, configured to: obtain voice in a call link and recognize the voice as a corresponding semantic when detecting that the distance exceeds the first threshold; and
a determination submodule, configured to: determine that the mobile terminal is in a hanging up state if the recognized voice semantic conforms to a preset ending-type voice semantic; and determine that the mobile terminal is in a continuous calling state if the recognized voice semantic does not conform to the preset ending-type voice semantic.

According to a third aspect of the embodiment of the present invention, a computer storage medium is provided, wherein computer executable instructions are stored in the computer storage medium, the computer executable instructions are used for executing the above-mentioned method for switching a talk mode of a mobile terminal.

In the embodiment of the present invention, a distance between a mobile terminal in a calling state and a current user is detected in real time; it is to identify whether the mobile terminal remains in the calling state when detecting that the distance exceeds a first preset threshold; the sight of the current user is detected when identifying that the mobile terminal remains in the calling state, and the talk mode of the mobile terminal is switched from a microphone mode to a speaker mode when detecting that the sight of the current user covers a screen area of the mobile terminal. Automatically switching the talk mode can be realized according to the usage habit of the user by using the technical scheme of the embodiment of the present invention, the switching modes conforming to the user expectations under various scenarios are built during a call, and the call experience is enhanced.

### Brief Description of Drawings

FIG. 1 is a flow chart of a method for switching a talk mode of a mobile terminal provided by an embodiment of the present invention;
FIG. 2 is a diagram of an apparatus for switching a talk mode of a mobile terminal provided by an embodiment of the present invention;
FIG. 3 is a flow chart of automatically switching talk mode provided by an embodiment of the present invention.

### Specified Embodiments

The preferred embodiments of the present invention are described in detail with reference to the accompanying drawings hereinafter. It should be understood that, the preferred embodiments illustrated hereinafter are only used to describe and explain the present invention, rather than constituting a limitation to the present invention.

During a call, the following application scenario is taken as an example: Because of the urgency of the event A, the current user has to cover the microphone to temporally terminate the call with the user at the opposite end, and turn to other people to explain the event A. In this case, if the mobile terminal automatically switches to a speaker mode, it may not only interfere with the user at the opposite end, but also may leak the privacy of the current user; while in the application scenario, what the current user hopes more is that the microphone can be automatically muted to ensure that the mobile terminal user at the call opposite end is free from interference and his/her own privacy is not leaked.

Based on that, the embodiment of the present invention is just using the habitual behavior of the user, for example, when the user attempts to adopt the speaker mode during the call, the user firstly would take the mobile terminal off the ear, and consciously search for the screen of the mobile terminal by the sight; at this time, the video acquisition unit of the mobile terminal, such as, a front camera, is used to track and collect the sight of the user, and the talk mode would be automatically switched to the speaker mode according to the tracking and acquisition result, which not only switches the talk mode of the mobile terminal to the desired mode of the user but also simplifies the user operation. And in the application scenario that the user temporarily has something to do, puts down the mobile terminal and explains something to other people, the habitual behavior of the user is to put down the mobile terminal and cover the microphone of the mobile terminal, then the mobile terminal automatically switches the talk mode from the microphone mode to the mute mode.

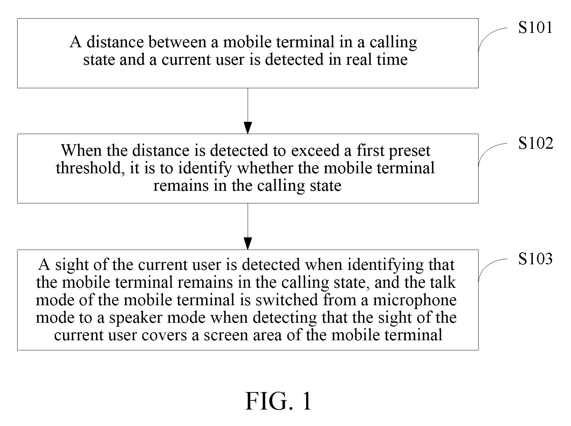

FIG. 1 is a flow chart of a method for switching a talk mode of a mobile terminal provided by an embodiment of the present invention; as shown in FIG. 1, the method includes:
In step S101, a distance between a mobile terminal in a calling state and a current user is detected in real time; here, during the process that the current user uses the mobile terminal to talk with the mobile terminal at the opposite end, the distance between the mobile terminal and the current user(that is, the human body) is detected in real time; herein, during the call, the talk mode initially adopted is the normal microphone mode.
In step S102, when the distance is detected to exceed a first preset threshold, it is to identify whether the mobile terminal remains in the calling state;
   here, when the distance exceeds the first threshold, the mobile terminal is determined to be away from the human body; when the distance does not exceed the first threshold, the mobile terminal is determined to be not away from the human body; herein, the first threshold is set according to the actual usage situation of the mobile terminal by the user.
In step S103, the sight of the current user is detected when identifying that the mobile terminal remains in the calling state, and the talk mode of the mobile terminal is switched from a microphone mode to a speaker mode when detecting that the sight of the current user covers a screen area of the mobile terminal.

In an embodiment of the present invention, the method further includes:
switching the talk mode of the mobile terminal from the microphone mode to a mute mode when identifying that the mobile terminal remains in the calling state and when detecting that the sight of the current user does not cover the screen area of the mobile terminal.

Specifically, it is to continue to detect a current air pressure value in a microphone of the mobile terminal when identifying that the mobile terminal remains in the calling state and when detecting that the sight of the current user does not cover the screen area of the mobile terminal; and if the current air pressure value is equal to or greater than the first air pressure value (also can be called as the hand-covered air pressure value), then the talk mode of the mobile terminal is switched from the microphone mode to the mute mode. Herein, the first air pressure value is an air pressure value generated by covering the microphone with hand when the mobile terminal is used by the current user.

In the embodiment of the present invention, the way for obtaining the first air pressure value, that is, the hand-covered air pressure value includes: obtaining the hand-covered air pressure value by monitoring the air pressure value generated by covering the microphone with hand; and storing the hand-covered air pressure value in the mobile terminal.

Specifically, said identifying whether the mobile terminal remains in the calling state when the distance is detected to exceed the first threshold, that is, the mobile terminal is away from the human body, includes: when the mobile terminal is detected to be away from the human body, obtaining the voice in the call link can be specifically obtaining the voice of the mobile terminal user at the opposite end, and recognizing the voice as the corresponding semantic; it is determined that the mobile terminal is in a hanging up state if the recognized voice semantic conforms to a preset ending-type voice semantic; and it is determined that the mobile terminal is in a continuous calling state if the recognized voice semantic does not conform to the preset ending-type voice semantic.

In an embodiment of the present invention, the method further includes: when the mobile terminal is detected from away from the human body to close to the human body, the talk mode of the mobile terminal is switched from the speaker mode to the microphone mode.

That is to say, when detecting that the distance between the mobile terminal and the human body is reduced from exceeding the first threshold to not exceeding the first threshold, the talk mode is switched from the speaker mode to the microphone mode.

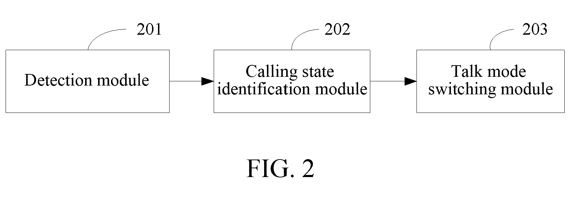

FIG. 2 is a diagram of an apparatus for switching a talk mode of a mobile terminal provided by an embodiment of the present invention; as shown in FIG. 2, the apparatus includes:
a detection module 201, configured to detect in real time a distance between a mobile terminal in a calling state and a current user;
here, during the process that the current user uses the mobile terminal to talk with the mobile terminal at the opposite end, the distance between the mobile terminal and the current user(that is, the human body) is detected by the detection module 201 in real time. Herein, during the call, the talk mode initially adopted is the microphone mode,
a calling state identification module 202, configured to: when the distance is detected to exceed a first preset threshold, identify whether the mobile terminal remains in the calling state;
here, when the calling state identification module 202 determines that the distance exceeds the first threshold, it is determined that the mobile terminal is away from the human body; when determining that the distance does not exceed the first threshold, it is determined that the mobile terminal is not away from the human body; herein, the first threshold is set according to the actual usage situation of the mobile terminal by the user,
a talk mode switching module 203, configured to: detect a sight of the current user when identifying that the mobile terminal remains in the calling state, and switch the talk mode of the mobile terminal from a microphone mode to a speaker mode when detecting that the sight of the current user covers a screen area of the mobile terminal.

Herein, the talk audio switching module 203 further includes:
a mute switching submodule, configured to: continue to detect a current air pressure value in a microphone of the mobile terminal when identifying that the mobile terminal remains in the calling state and when detecting that the sight of the current user does not cover the screen area of the mobile terminal; and then switch the talk mode of the mobile terminal from the microphone mode to a mute mode when detecting that the current air pressure value in the microphone of the mobile terminal is equal to or greater than the first air pressure value. Herein, the first pressure value is the pressure value generated by covering the microphone with hand when the mobile terminal is used by the current user,
a submodule for obtaining a first air pressure value, configured to: obtain the hand-covered air pressure value by monitoring an air pressure value generated by covering the microphone with hand of the current user; and store the hand-covered air pressure value in the mobile terminal.

The calling state identification module 202 includes:
a recognition submodule, configured to: obtain voice in a call link, which can be specifically the voice of the mobile terminal user at the opposite end in the call link, and recognize the voice as a corresponding semantic when detecting that the distance exceeds the first threshold, that is, the mobile terminal is away from the human body;
a determination submodule, configured to: determine that the mobile terminal is in a hanging up state when the recognized voice semantic conforms to a preset ending-type voice semantic; and determine that the mobile terminal is in a continuous calling state when the recognized voice semantic does not conform to the preset ending-type voice semantic.

In practical application, the detection module 201, the calling state identification module 202, and the talk mode switching module 203 can all be realized with the central processing unit (CPU), or the digital signal processor (DSP), the microprocessor unit (MPU), or the field programmable gate array (FPGA), etc.; and the CPU, the DSP and the FPGA all can be built in the mobile terminal.

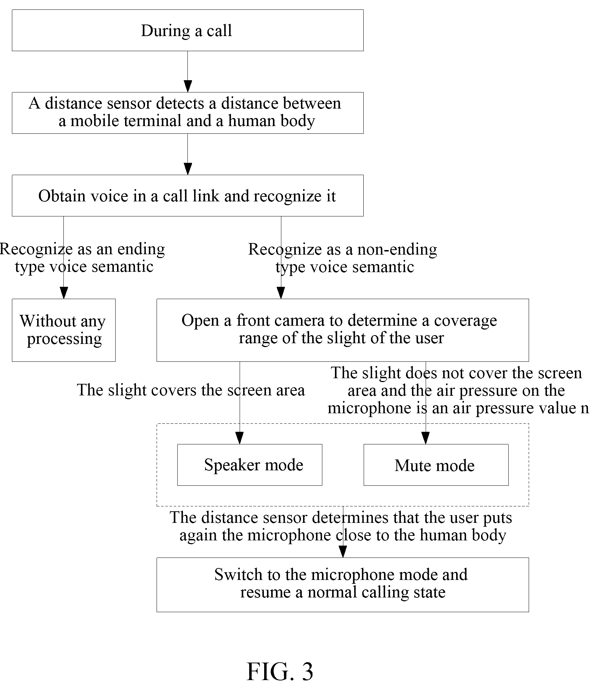

FIG. 3 is a flow chart of automatically switching a talk mode provided by an embodiment of the present invention; as shown in FIG. 3, first of all, the mobile terminal has a front camera and firstly monitors a first air pressure value, obtains the pressure value n generated when the human hand covers the microphone, and performs the voice recognition function in the call link. Specifically,

In step one, during the call initiation process, the distance between the mobile terminal and the human body is determined;
when the distance sensor senses that the distance between the microphone and the user is less than the preset second threshold, it represents that the user makes the call in the microphone mode at that time, the front camera is shut down and the microphone works normally; and when the distance sensor senses that the distance between the microphone and the user is greater than or equal to the second threshold, that is, the user is away from the microphone, then it represents that the user already puts down the cell phone at that time, and it firstly needs to open the voice recognition function. Herein, the second threshold is set according to the actual usage situation of the user.

In step two, it is to determine whether the mobile terminal remains in the calling state by using the voice recognition function;
the voice in the call link is obtained and recognized as the corresponding semantic, if the recognized voice semantic contains the meaning, such as, "goodbye, bye bye, see you tomorrow" (several different voice semantics built in), etc., then it is to determine that the user is currently in a state of intending-to-hanging up the call, and then no operation is executed; If the recognized voice semantic does not contain the above meaning, then it is to determine that the user is in a continuous calling state, and then a step three is to continue.

In step three, the front camera is opened to capture the sight of the user, to monitor the air pressure value on the microphone;
after it is to determine that the user has the will of continuing the calling, if the sight of the user captured by the front camera is in the screen area, then it is to determine that the user is in a calling state of trying to enter the speaker mode, and then the mobile terminal automatically switches the talk mode to the speaker mode; if the front camera is failed to capture the sight of the user and the obtained air pressure value on the microphone is equal to the air pressure value n, then it is to determine that the user is in a state of trying to communicate with other people, and then the mobile terminal automatically switches to the mute mode.

In step four, if the distance sensor detects again that the mobile terminal is close to the human body, then it is to determine that the user tries to resume the talk mode as the microphone mode, and then the communication mode of the mobile terminal is switched to the microphone mode from the mute mode and the normal calling state is resumed.

The embodiment of the present invention further records a computer storage medium where computer executable instructions are stored, herein, the computer executable instructions are used for executing the above-mentioned method for switching a talk mode of a mobile terminal.

In the embodiment of the present invention, during the call of the mobile terminal, the habitual behavior of the user is used for automatically switching the talk mode to the user desired mode through the functions of voice identification, tracking the slight of the user, etc., which is convenient for the users and enhances the user experience.

Those skilled in the art should understand that the embodiment of the present invention can provide a method, system or computer program product. Therefore, the present invention can adopt the form of a hardware embodiment, a software embodiment, or an embodiment in combination with software and hardware aspects. And, the present invention can adopt the form of computer program products implemented on one or more of computer available storage mediums (including but not limited to a disk memory and an optical memory, etc.) which contain the computer usable program code.

The present invention is described referring to a flow chart and / or a block diagram of the method, device (system), and computer program product of the embodiment of the present invention. It should be understood that each flow and/or block in the flow chart and/or the block diagram and the combination of the flow and/or block in the flow chart and/or the block diagram can be realized by the computer program instructions. The computer program instructions can be provided to a general purpose computer, a special purpose computer, an embedded processor or processors of other programmable data processing devices to produce a machine, and enable the instructions executed through the computer or the processors of other programmable data processing devices generate the apparatus to realize the functions specified in one or more flows in the flow chart and/or one or more blocks in the block diagram.

Those computer program instructions can also be stored in a computer readable memory which can boot a computer or other programmable data processing devices to work in a specific manner, to enable the instructions stored in the computer readable memory to generate manufacturing products including the instruction apparatus, and the instruction apparatus realizes the functions specified in one or more flows in the flow chart and/or one or more blocks in the block diagram.

Those computer program instructions can also be loaded to the computer or other programmable data processing devices, to enable to execute a series of operation steps on the computer or other programmable devices to generate a processing realized by the computer, and thus the instructions executed on the computer or other programmable devices provide the step for realizing the functions specified in one or more flows in the flow chart and/or one or more blocks in the block diagram.

Although the above document describes the present invention in detail, the present invention is not limited here. Those skilled in the art can make various modifications according to the principles of the present invention. Therefore, all the modifications made according to the principles of the present invention should be understood to be embodied in the protection scope of the present invention.

## Claims

1. A method for switching a talk mode of a mobile terminal, comprising:
detecting in real time a distance between a mobile terminal in a calling state and a current user;
identifying whether the mobile terminal remains in the calling state when detecting that the distance exceeds a first preset threshold;
detecting a sight of the current user when identifying that the mobile terminal remains in the calling state, and switching the talk mode of the mobile terminal from a microphone mode to a speaker mode when detecting that the sight of the current user covers a screen area of the mobile terminal.

2. The method according to claim 1, wherein the method further comprises:
switching the talk mode of the mobile terminal from the microphone mode to a mute mode when identifying that the mobile terminal remains in the calling state and when detecting that the sight of the current user does not cover the screen area of the mobile terminal.

3. The method according to claim 2, wherein, said switching the talk mode of the mobile terminal from the microphone mode to a mute mode when identifying that the mobile terminal remains in the calling state and when detecting that the sight of the current user does not cover the screen area of the mobile terminal comprises:
continuing to detect a current air pressure value in a microphone of the mobile terminal when identifying that the mobile terminal remains in the calling state and when detecting that the sight of the current user does not cover the screen area of the mobile terminal; and
if the current air pressure value is equal to or greater than an obtained first air pressure value, then switching the talk mode of the mobile terminal from the microphone mode to the mute mode.

4. The method according to any one of claims 1 to 3, wherein the method further comprises:
obtaining the first air pressure value by monitoring an air pressure value generated by covering the microphone of the mobile terminal with hand; and
storing the first air pressure value in the mobile terminal.

5. The method according to claim 4, wherein, said identifying whether the mobile terminal remains in the calling state when detecting that the distance exceeds a first preset threshold comprises:
obtaining voice in a call link and recognizing the voice as a corresponding semantic when detecting that the mobile terminal exceeds the preset first threshold;
determining that the mobile terminal is in a hanging up state if the recognized voice semantic conforms to a preset ending-type voice semantic; and
determining that the mobile terminal is in a continuous calling state if the recognized voice semantic does not conform to the preset ending-type voice semantic.

6. The method according to claim 5, wherein the method further comprises:
when detecting that the distance between the mobile terminal and the current user is reduced from exceeding the first threshold to not exceeding the first threshold, switching the talk mode of the mobile terminal from the speaker mode to the microphone mode.

7. An apparatus for switching a talk mode of a mobile terminal, comprising:
a detection module, configured to detect in real time a distance between a mobile terminal in a calling state and a current user;
a calling state identification module, configured to: when detecting that the distance exceeds a first preset threshold, identify whether the mobile terminal remains in the calling state; and
a talk mode switching module, configured to: detect a sight of the current user when identifying that the mobile terminal remains in the calling state, and switch the talk mode of the mobile terminal from a microphone mode to a speaker mode when detecting that the sight of the current user covers a screen area of the mobile terminal.

8. The apparatus according to claim 7, wherein the talk audio switching module comprises:
a mute switching submodule, configured to: continue to detect a current air pressure value in a microphone of the mobile terminal when identifying that the mobile terminal remains in the calling state and when detecting that the sight of the current user does not cover the screen area of the mobile terminal; and then switch the talk mode of the mobile terminal from the microphone mode to a mute mode when detecting that the current air pressure value is equal to or greater than an obtained first air pressure value.

9. The apparatus according to claim 7 or 8, wherein, the talk audio switching module further comprises:
a submodule for obtaining a first air pressure value, configured to: obtain the first air pressure value by monitoring an air pressure value generated by covering the microphone of the mobile terminal with hand of the current user; and store the first air pressure value in the mobile terminal.

10. The apparatus according to claim 9, wherein, the calling state identification module comprises:
a recognition submodule, configured to: obtain voice in a call link and recognize the voice as a corresponding semantic when detecting that the distance exceeds the first threshold; and
a determination submodule, configured to: determine that the mobile terminal is in a hanging up state if the recognized voice semantic conforms to a preset ending-type voice semantic; and determine that the mobile terminal is in a continuous calling state if the recognized voice semantic does not conform to the preset ending-type voice semantic.

11. A computer storage medium, wherein computer executable instructions are stored in the computer storage medium, the computer executable instructions are used for executing the method for switching a talk mode of a mobile terminal according to any one of claims 1 to 6.
